# EUROPÄISCHE PATENTANMELDUNG

(11) **EP 4 576 486 A1**
(43) Veröffentlichungstag der Anmeldung: **25.06.2025**
(21) Anmeldenummer: 23219207.0
(22) Anmeldetag: 21.12.2023
(51) Int. Cl.: H02J 7/00, H01M 10/42, H01M 10/48, H02J 7/36

(54) **BATTERIEPACK UND BATTERIEMANAGEMENTSYSTEM**

(71) Anmelder: Hilti Aktiengesellschaft, 9494 Schaan (LI)
(72) Erfinder: Goyal, Varnim, 86899 Landsberg am Lech (DE); Müller, Simon, 86399 Bobingen (DE)
(74) Vertreter: Hilti Aktiengesellschaft Corporate Intellectual Property

(57) **Zusammenfassung**

Die Erfindung betrifft ein **Batteriepack (30)** für eine mobile Werkzeugmaschine (10), beispielsweise eine Handwerkzeugmaschine, umfassend mehrere Batteriezellen (38) sowie ein Batteriemanagementsystem (52). Es ist dadurch gekennzeichnet, dass das Batteriepack (30) wenigstens einen Schalter (46, 48, 50) aufweist, der vom Batteriemanagementsystem (52) steuerbar ist und der eingerichtet ist, eine Untergruppe (32, 34, 36) der Batteriezellen (38) anzuschalten oder abzuschalten. Ferner betrifft die Erfindung ein Batteriemanagementsystem (52). Sie ermöglicht eine kostengünstige Bereitstellung elektrischer Energie für eine mobile Werkzeugmaschine (10).

## Beschreibung

Die Erfindung geht aus von einem Batteriepack für eine mobile Werkzeugmaschine, beispielsweise eine Handwerkzeugmaschine. Das Batteriepack umfasst mehrere Batteriezellen sowie ein Batteriemanagementsystem. Das Batteriemanagementsystem dient üblicherweise dazu, Ladevorgänge und Entladevorgänge des Batteriepacks, insbesondere seiner Batteriezellen, zu steuern.

Moderne Batteriepacks umfassen eine Vielzahl von Batteriezellen. Durch geeignete Reihenschaltungen und / oder durch geeignete Parallelschaltungen der Batteriezellen können erforderliche Nennspannungen und Nennstromstärken durch das Batteriepack bereitgestellt werden.

Durch Lade- und Entladezyklen altern jedoch die Batteriezellen. Auch können äußere Einflüsse, beispielsweise Stürze des Batteriepacks zu Schädigungen einzelner Batteriezellen führen.

Ab einem gewissen Alterungsgrad und / oder Schädigungsgrad sind Batteriezellen nicht mehr einsatzfähig, so dass das Batteriepack nicht mehr verwendbar ist, weshalb das Batteriepack ersetzt werden muss. Dadurch entstehen hohe laufende Kosten beim Betrieb einer mobilen Werkzeugmaschine. Auch im Hinblick auf Nachhaltigkeitsziele ist der Verlust eines Batteriepacks aufgrund solcher Alterungs- und / oder Schädigungsprozesse ungünstig.

Aufgabe der vorliegenden Erfindung ist es daher, Vorrichtungen, insbesondere ein Batteriepack, anzubieten, durch die kostengünstig elektrische Energie für eine mobilen Werkzeugmaschine bereitgestellt werden kann.

Gelöst wird die Aufgabe zunächst durch ein **Batteriepack** für eine mobile Werkzeugmaschine, beispielsweise eine Handwerkzeugmaschine, umfassend mehrere Batteriezellen sowie ein Batteriemanagementsystem, wobei das Batteriepack wenigstens einen Schalter aufweist, der vom Batteriemanagementsystem steuerbar ist und der eingerichtet ist, eine Untergruppe der Batteriezellen anzuschalten oder abzuschalten.

Unter "abschalten" kann ein Außer-Funktion-Setzen verstanden werden. Insbesondere kann "abschalten" somit bedeuten, dass die Untergruppe von den übrigen Batteriezellen elektrisch abgetrennt wird. "Abschalten" kann auch bedeuten, dass die zur Untergruppe gehörenden Batteriezellen überbrückt werden. Dementsprechend kann unter "anschalten" eine Inbetriebnahme verstanden werden.

Ein der Erfindung zugrunde liegender Gedanke ist dabei, dass Verschlechterungen von Batteriezellen für verschiedene Batteriezellen unterschiedlich ausfallen oder verlaufen können. Beispielsweise können sich Batteriezellen verschlechtern durch uneinheitliche Alterung. Sie können uneinheitlich gefertigt sein. Auch kann die Qualität von Schweißpunkten variieren. Die Batteriezellen können unterschiedliche Temperaturverhalten zeigen. Sortierungen zur Zusammenstellung der Batteriezellen für ein Batteriepack können zu grob erfolgt sein. Über die Nutzungsdauer hinweg können einzelne Batteriezellen stärkere Stöße durch einen Sturz des Batteriepacks erfahren haben als andere. Viele weitere Faktoren können sich darüber hinaus auf den Gesundheitszustand von Batteriezellen auswirken. Somit ist es denkbar, dass, obwohl eine einzelne der Batteriezellen sich verschlechtert haben, sich andere Batteriezellen in einem guten Gesundheitszustand befinden können.

Das Batteriemanagementsystem kann eine Fehlfunktion einer oder mehrerer der Batteriezellen, beispielsweise, dass eine Batteriezelle nicht mehr die von ihr erwartete Kapazität bereitstellen kann, erkennen.

Im Batteriepack können zusätzliche, funktionsfähige Batteriezellen als Reserve vorgesehen sein. Das Batteriemanagementsystem kann dann den Schalter derart steuern, dass die als Reserve vorgesehenen Batteriezellen angeschaltet werden. Die zusätzlichen Batteriezellen können somit einen etwaigen Verlust von Batteriekapazität kompensieren.

Denkbar ist auch, dass die Fehlfunktion die Untergruppe betrifft, auf die der Schalter wirkt. Dann kann das Batteriemanagementsystem, sobald es die Fehlfunktion einer oder mehrerer Batteriezellen der Untergruppe erkennt, den Schalter derart steuern, dass die Untergruppe abgeschaltet wird.

Dadurch können auch potenziell schwerwiegende Folgeschäden durch die beschädigten Batteriezellen vermieden werden. Beispielsweise können Überhitzungen und dadurch ein thermisches Durchgehen der geschädigten Batteriezellen und damit des gesamten Batteriepacks vermieden werden.

Somit können mit der Nutzung des Batteriepacks verbundene Gefahren minimiert oder sogar ausgeschlossen werden. Dies ist für Batteriepacks, die für mobile Werkzeugmaschinen vorgesehen sind, besonders wichtig, da die mobilen Werkzeugmaschinen üblicherweise in Situationen genutzt werden, in denen beispielsweise Bauarbeiter sich in unmittelbarer Nähe zu der jeweiligen mobilen Werkzeugmaschine befinden. Eine Explosion oder ein Brand des Batteriepacks könnten somit nicht absehbare Schadfolgen für den Bauarbeiter nach sich ziehen.

In beiden Konstellationen kann im Ergebnis das Batteriepack länger genutzt werden als ohne die hier vorgesehenen Maßnahmen. Fixkosten, beispielsweise für das Gehäuse, das Batteriemanagementsystem oder weiterer Bestandteile des Batteriepacks, können sich somit über einen längeren Zeitraum amortisieren. Die Nutzung des Batteriepacks kann dadurch kostengünstiger werden. Elektrische Energie kann der mobilen Werkzeugmaschine, mit der das Batteriepack verwendet wird, kostengünstiger bereitgestellt werden. Zudem können Gefahren minimiert werden.

Denkbar ist, dass das Batteriepack mehrere Schalter aufweist, die vom Batteriemanagement steuerbar sind und die eingerichtet sind, unterschiedliche Untergruppen der Batteriezellen anzuschalten oder abzuschalten. Beispielsweise kann ein Batteriepack drei oder mehr Untergruppen von Batteriezellen aufweisen. Innerhalb jeder Untergruppe können die Batteriezellen in Reihe geschaltet sein. Die Untergruppen können zueinander parallelgeschaltet sein.

Dabei umfasst jede der Untergruppen vorzugsweise dieselbe Anzahl von Batteriezellen. Dann kann jede einzelne Untergruppe dieselbe Nennspannung bereitstellen. Ist nun in einer der Untergruppen wenigstens eine der Batteriezellen defekt oder weist allgemein eine Fehlfunktion auf, so kann das Batteriemanagementsystem eingerichtet sein, diese Untergruppe mithilfe des zugehörigen Schalters abzuschalten. Damit kann das Batteriepack trotz der Fehlfunktion genutzt werden. Es kann weiterhin dieselbe Nennspannung bereitstellen. Lediglich seine verfügbare Gesamtkapazität kann unter Umständen dadurch verringert sein. Ein vollständiger Verlust des gesamten Batteriepacks lässt sich so vermeiden.

Damit das Batteriemanagementsystem eine Fehlfunktion einer der Batteriezellen detektieren kann, kann vorgesehen sein, dass das Batteriepack zumindest einen SOH-Sensor zur Messung eines Gesundheitszustandes einer Untergruppe der Batteriezellen und / oder aller Batteriezellen umfasst. SOH kann dabei für "State Of Health", englisch für Gesundheitszustand, stehen.

Der SOH-Sensor kann ein Stromsensor, ein Widerstandssensor, ein Temperatursensor und / oder dergleichen sein. Allgemein kann er ein oder mehrere Sensoren umfassen, mit denen sich ein Gesundheitszustand der betreffenden Batteriezellen bzw. der Untergruppe ermitteln lässt.

Als Widerstandssensor kann er eingerichtet sein, einen Innenwiderstand der von ihm überwachten Batteriezellen zu messen. Der Innenwiderstand kann ein Maß für den Gesundheitszustand der betreffenden Batteriezellen sein. Als Stromsensor kann, beispielsweise durch Integration über einen vollständigen Lade- oder Entladezyklus hinweg, die verfügbare Kapazität der betreffenden Batteriezellen als ein weiteres mögliches Maß für den Gesundheitszustand der betreffenden Batteriezellen gemessen werden. Als Temperatursensor kann er eingerichtet sein, eine Temperatur der betreffenden Batteriezellen zu überwachen. Die Temperatur kann beispielsweise eine Kerntemperatur der betreffenden Batteriezellen sein. Dann kann die betreffende Untergruppe, für die die Temperatur durch den SOH-Sensor gemessen wird, abgeschaltet werden, sobald die Temperatur eine kritische Grenztemperatur erreicht oder überschreitet. Somit können Batteriezellen, bevor sie beispielsweise thermisch durchgehen, abgeschaltet werden.

Da, wie vorangehend geschildert, Alterungsprozesse als auch Schädigungen für unterschiedliche Batteriezellen und damit unterschiedliche Untergruppen unterschiedlich ausgeprägt sein können, ist denkbar, dass das Batteriepack mehrere SOH-Sensoren zur Messung des jeweiligen Gesundheitszustandes mehrerer der Untergruppen, insbesondere aller Untergruppen, umfasst. Somit kann für jede einzelne Untergruppe ein Gesundheitszustand ermittelt werden. Anhand des Untergruppen-spezifischen Gesundheitszustands kann dann das Batteriemanagementsystem den zugehörigen Schalter steuern.

Einem Benutzer des Batteriepacks oder einer mobilen Werkzeugmaschine, mit der das Batteriepack verwendet werden soll, kann angezeigt werden, welche oder wieviele der Untergruppen zur Energieversorgung verfügbar sind, wenn das Batteriepack eine Anzeige aufweist, die eingerichtet ist, einen Schaltzustand wenigstens eines der Schalter anzuzeigen. Darunter kann auch verstanden werden, dass die Anzeige nicht unmittelbar den Schaltzustand selbst sondern eine damit korrelierenden Information des Batteriemanagementsystems wiedergibt.

Hat das Batteriemanagementsystem in einer der Untergruppen eine Fehlfunktion der betreffenden Batteriezelle oder der betreffenden Batteriezellen festgestellt, sollte die Untergruppe dauerhaft abgeschaltet werden. Dazu ist es günstig, wenn das Batteriepack einen, insbesondere nichtflüchtigen, Speicher aufweist, der eingerichtet ist, den Schaltzustand wenigstens eines der Schalter abrufbar zu speichern. In dem Speicher kann dann beispielsweise abgelegt werden, welche der Untergruppen abgeschaltet sein sollten. Wie wird das Batteriepack insgesamt ausgeschaltet, kann diese Information im nichtflüchtigen Speicher erhalten bleiben. Bei einer nachfolgenden, erneuten Verwendung des Batteriepacks, insbesondere bei einem erneuten Einschalten des Batteriemanagementsystems, kann dann diese Informationen abgerufen werden und der oder die betreffenden Schalter können entsprechend gesteuert werden.

Wenigstens einer der Schalter kann ein elektronischer Schalter sein. Er kann beispielsweise ein MOSFET sein. Insbesondere kann es sich um einen selbstleitenden MOSFET handeln, sodass im Standardzustand alle Untergruppen genutzt werden und lediglich bei Fehlfunktionen die betreffenden Untergruppen abgeschaltet werden. Es kann sich auch um einen elektrisch steuerbaren, mechanisch schaltenden Schalter handeln. Beispielsweise kann es sich um ein Relais handeln. Denkbar ist auch, dass der Schalter als elektrisch steuerbare Sicherung ausgebildet ist. Insbesondere kann er ausgebildet sein, dass durch ein Schaltsignal, beispielsweise durch einen geeigneten Impuls an einem Steuereingang des Schalters, eine zu schaltende Verbindung dauerhaft unterbrochen wird.

Das Batteriepack, insbesondere das Batteriemanagementsystem, kann auch eine Kommunikationseinheit umfassen. Die Kommunikationseinheit kann eine Funk-basierte Kommunikationseinheit sein. Alternativ oder ergänzend ist auch denkbar, dass die Kommunikationseinheit über ein oder mehrere Leitungen eines Verbindungsabschnitts des Batteriepacks, über den auch die elektrische Energie an die Werkzeugmaschine abgebbar ist, kommuniziert. Über die Kommunikationseinheit können Daten bezüglich der Verfügbarkeit der einzelnen Untergruppen und / oder einer verfügbaren Gesamtkapazität des Batteriepacks abrufbar sein.

In den Rahmen der Erfindung fällt auch ein **Batteriemanagementsystem** für ein Batteriepack der hier beschriebenen Art, wobei das Batteriemanagementsystem eingerichtet ist, abhängig von einem Gesundheitszustand einer Untergruppe von Batteriezellen des Batteriepacks einen der Untergruppe zugeordneten Schalter des Batteriemanagementsystems zu steuern.

Das Batteriemanagementsystem kann eingerichtet sein, mithilfe der SOH-Sensoren die Untergruppen der Batteriezellen hinsichtlich ihres jeweiligen Gesundheitszustandes zu überwachen. Das Batteriemanagementsystem kann einen Microcontroller aufweisen. Der Mikrocontroller kann einen Prozessor sowie einen Speicher umfassen. Im Speicher kann ein Computerprogrammprodukt abrufbar abgelegt sein. Das Computerprogrammprodukt kann eingerichtet sein, bei Ausführung auf dem Prozessor die Schalter abhängig von den durch die SOH-Sensoren gemessenen oder auf deren Sensordaten beruhend ermittelten Gesundheitszuständen der jeweiligen Untergruppen von Batteriezellen zu steuern.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine mobile Werkzeugmaschine mit einem Batteriepack,
- Fig. 2: ein Schaltschema eines Batteriepacks und
- Fig. 3: das Schaltschema, wobei eine Batteriezelle eine Fehlfunktion aufweist.

In der nachfolgenden Beschreibung der Figuren werden zur Erleichterung des Verständnisses der Erfindung für gleiche oder sich funktional entsprechende Elemente jeweils die gleichen Bezugszeichen verwendet.

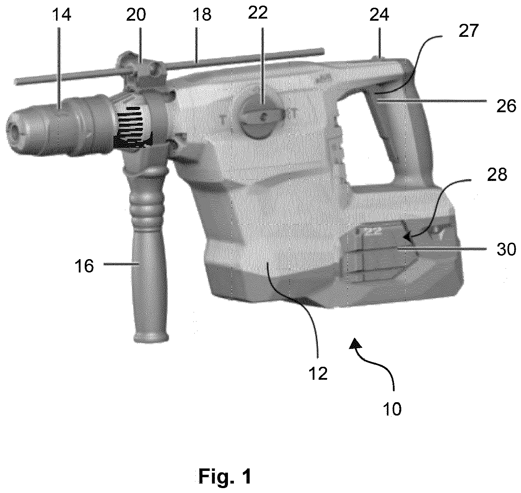

**Fig. 1** zeigt eine Werkzeugmaschine **10.** Die mobile Werkzeugmaschine 10 ist eine Bohrhammermaschine. Insbesondere ist sie zum Bohren von Gestein ausgebildet. Sie umfasst ein Gehäuse **12.** An einer Werkzeugaufnahme **14** können Werkzeuge (in Fig. 1 nicht dargestellt), beispielsweise Bohrwerkzeuge oder Meißelwerkzeuge, eingesetzt werden. Die Werkzeugmaschine 10 kann an einem Seitenhandgriff **16** gehalten werden. Zur Kontrolle von Tiefen ist ein Abstandshalter **18** vorgesehen, der in einer Halterung **20** verschiebbar sitzt. Zur Auswahl verschiedener Betriebsmodi, insbesondere eines schlagenden oder eines nichtschlagenden Betriebsmodus, ist ein Moduswahlschalter **22** vorgesehen. Die Leistung der mobilen Werkzeugmaschine 10 lässt sich mit Hilfe eines Reglers **24** einstellen. Im Gehäuse 12 ist ein hinterer Handgriff **26** ausgebildet. Am Handgriff 26 befindet sich ferner ein Start-Stopp-Schalter **27,** um die mobile Werkzeugmaschine 10 zu aktivieren oder zu deaktivieren.

Zur Energieversorgung weist die mobile Werkzeugmaschine 10 einen Batterieschacht **28** auf, indem ein Batteriepack **30** sitzt.

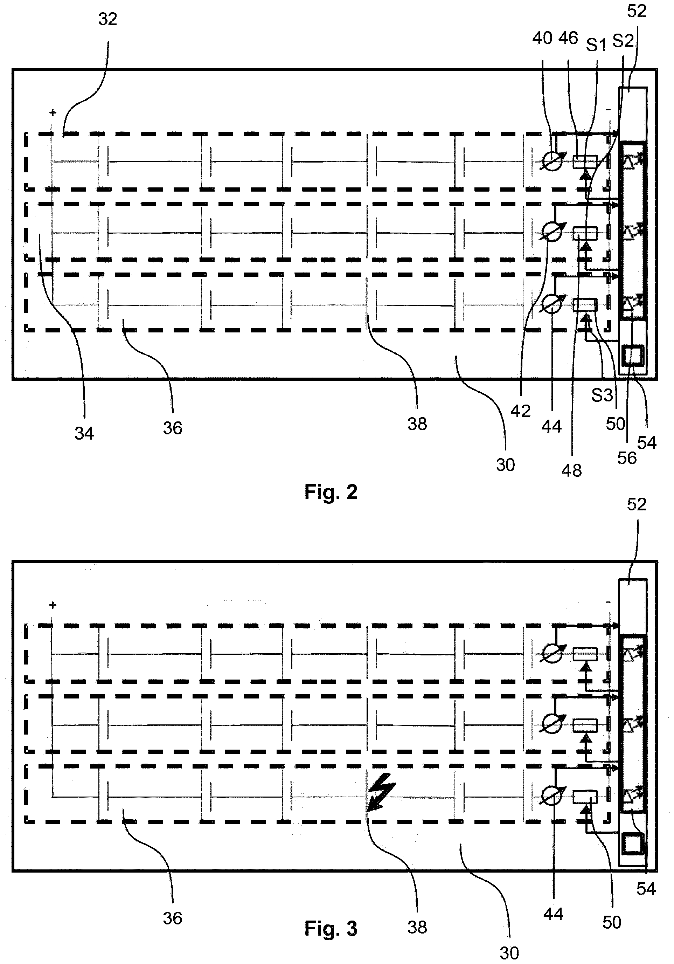

**Fig. 2** zeigt ein Schaltschema des Batteriepacks 30. Zu erkennen ist, dass das Batteriepack 30 drei Untergruppen **32, 34** und **36** von Batteriezellen **38** aufweist. Zur Vereinfachung der Darstellung ist von den insgesamt 18 Batteriezellen lediglich eine der Batteriezellen mit dem Bezugszeichen 38 versehen. Bei den Batteriezellen 38 handelt es sich um Lithium-basierte Batteriezellen. Denkbar ist auch, dass es sich um Natrium-basierte Batteriezellen handelt.

Innerhalb jeder der Untergruppen 32, 34 und 36 sind die Batteriezellen 38 in Reihe geschaltet. Im Beispiel gemäß Fig. 2 sind jeder der Untergruppen 32, 34, 36 jeweils sechs Batteriezellen 38 zugeordnet. Bei einer Nennspannung von beispielsweise 3,6 V je Batteriezelle 38 weist somit jede der Untergruppen 32, 34, 36 eine Nennspannung von circa 22 V auf.

Jede der Untergruppen 32, 34, 36 weist ferner einen SOH-Sensor **40, 42, 44** auf. Die SOH-Sensoren 40, 42, 44 sind in diesem Ausführungsbeispiel Stromsensoren.

In Reihe mit den jeweiligen Batteriezellen 38 jeder der Untergruppen 32, 34, 36 sind Schalter **46, 48, 50** geschaltet. Die Schalter 46, 48, 50 sind selbstleitend und somit standardmäßig leitend geschaltet. Bei Steuersignalen auf Steuereingänge **S1, S2, S3** werden die jeweiligen Schalter 46, 48 und 50 nichtleitend geschaltet, so dass die jeweilige zugeordnete Untergruppe 32, 34, 36 abgeschaltet wird. Dazu können die Schalter 46, 48, 50 als selbstleitende MOSFET ausgebildet sein.

Durch zeitliche Integration der durch die SOH-Sensoren 40, 42, 44 gemessenen Ströme während beispielsweise eines vollständigen Entladezyklus ermittelt ein Batteriemanagementsystem **52** für jede der Untergruppen 32, 34, 36 einen Gesundheitszustand in Form einer in der jeweiligen Untergruppe 32, 34, 36 verfügbaren Batteriekapazität.

Unterschreitet die ermittelte Batteriekapazität einer der Untergruppen 32, 34, 36 einen kritischen Grenzwert, so signalisiert dies eine Fehlfunktion wenigstens einer der zu der jeweiligen Untergruppe 32, 34, 36 gehörende Batteriezelle 38. Das Batteriemanagementsystem 52 schaltet dann die entsprechende Untergruppe 32, 34 oder 36 mithilfe des zugehörigen Schalters 46, 48 oder 50 ab. Sie vermerkt dies in einem nichtflüchtigen Speicher **54.** Eine Anzeigeeinheit **56** mit drei LED zeigt zudem an, welche der Untergruppe 32, 34, 36 jeweils zur Energieversorgung der mobilen Werkzeugmaschine 10 bereitstehen oder abgeschaltet sind.

Eine Situation, in der eine der Batteriezellen 38 des Batteriemanagementsystems eine Fehlfunktion aufweist, zeigt Fig. 3. Schematisch ist in Fig. 3 die Fehlfunktion mit einem Blitz markiert. Beispielsweise kann diese Batteriezelle einen Kurzschluss aufweisen. Die in der zugehörigen Untergruppe 36 verfügbare Batteriekapazität ist verringert. Insbesondere unterschreitet sie den kritischen Grenzwert. Das Batteriemanagementsystem 52 hat dies mit Hilfe des zugehörigen SOH-Sensors 44 detektiert und den Schalter 50 so gesteuert, dass die Stromleitung durch den Schalter 50 hindurch gesperrt ist. Damit ist die Untergruppe 36 abgeschaltet. Dies ist in Fig. 3 schematisch durch die aufgehobene Verbindung duvch den Schalter 50 hindurch symbolisiert.

Das Batteriemanagementsystem 52 kann noch weitere Funktionen und Elemente aufweisen, insbesondere zur Steuerung von Ladevorgängen und Entladevorgänge. Zugehörige, dafür benötigte zusätzliche Elemente sind zur Vereinfachung der Darstellung in Fig. 2 und in Fig. 3 nicht abgebildet.

### Bezugszeichenliste

- 10: Werkzeugmaschine
- 12: Gehäuse
- 14: Werkzeugaufnahme
- 16: Seitenhandgriff
- 18: Abstandshalter
- 20: Halterung
- 22: Moduswahlschalter
- 24: Regler
- 26: Handgriff
- 27: Start-Stopp-Schalter
- 28: Batterieschacht
- 30: Batteriepack
- 32: Untergruppe
- 34: Untergruppe
- 36: Untergruppe
- 38: Batteriezelle
- 40: SOH-Sensor
- 42: SOH-Sensor
- 44: SOH-Sensor
- 46: Schalter
- 48: Schalter
- 50: Schalter
- 52: Batteriemanagementsystem
- 54: Speicher
- 56: Anzeigeeinheit
- S1: Steuereingang
- S2: Steuereingang
- S3: Steuereingang

## Patentansprüche

1. **Batteriepack (30)** für eine mobile Werkzeugmaschine (10), beispielsweise eine Handwerkzeugmaschine, umfassend mehrere Batteriezellen (38) sowie ein Batteriemanagementsystem (52),
**dadurch gekennzeichnet,**
**dass** das Batteriepack (30) wenigstens einen Schalter (46, 48, 50) aufweist, der vom Batteriemanagementsystem (52) steuerbar ist und der eingerichtet ist, eine Untergruppe (32, 34, 36) der Batteriezellen (38) anzuschalten oder abzuschalten.

2. Batteriepack (30) nach dem vorherigen Anspruch, **dadurch gekennzeichnet, dass** das Batteriepack (30) mehrere Schalter (46, 48, 50) aufweist, die vom Batteriemanagementsystem (52) steuerbar sind und die eingerichtet sind, unterschiedliche Untergruppen 32, 34, 36 der Batteriezellen (38) anzuschalten oder abzuschalten.

3. Batteriepack (30) nach einem der vorherigen Ansprüche, **dadurch gekennzeichnet, dass** das Batteriepack (30) zumindest einen SOH-Sensor (40, 42, 44) zur Messung eines Gesundheitszustandes einer Untergruppe (32, 34, 36) der Batteriezellen (38) und / oder aller Batteriezellen (38) umfasst.

4. Batteriepack (30) nach einem der vorherigen Ansprüche, **dadurch gekennzeichnet, dass** das Batteriepack (30) mehrere SOH-Sensoren (40, 42, 44) zur Messung des jeweiligen Gesundheitszustandes mehrerer der Untergruppen (32, 34, 36), insbesondere aller Untergruppen, umfasst.

5. Batteriepack (30) nach einem der vorherigen Ansprüche, **dadurch gekennzeichnet, dass** das Batteriepack (30) eine Anzeigeeinheit (56) aufweist, die eingerichtet ist, einen Schaltzustand wenigstens eines der Schalter (46, 48, 50) anzuzeigen.

6. Batteriepack (30) nach einem der vorherigen Ansprüche, **dadurch gekennzeichnet, dass** das Batteriepack (30) einen, insbesondere nichtflüchtigen, Speicher (54) aufweist, der eingerichtet ist, den Schaltzustand wenigstens eines der Schalter (46, 48, 50) abrufbar zu speichern.

7. **Batteriemanagementsystem (52)** für ein Batteriepack (30) nach einem der vorhergehenden Ansprüche, **dadurch gekennzeichnet, dass** das Batteriemanagementsystem (52) eingerichtet ist, abhängig von einem Gesundheitszustand einer Untergruppe (32, 34, 36) von Batteriezellen (38) des Batteriepacks (30) einen der Untergruppe (32, 34, 36) zugeordneten Schalter (46, 48, 50) des Batteriemanagementsystems (52) zu steuern.
